(19) **Europäisches Patentamt**
**European Patent Office**
**Office européen des brevets**

(11) **EP 4 563 649 A1**

(12) **EUROPEAN PATENT APPLICATION**
published in accordance with Art. 153(4) EPC

(43) Date of publication:
**04.06.2025 Bulletin 2025/23**

(21) Application number: **23846588.4**

(22) Date of filing: **26.07.2023**

(51) International Patent Classification (IPC):
***C08L 33/08*** (2006.01)     ***C08C 19/00*** (2006.01)
***C08K 3/04*** (2006.01)

(52) Cooperative Patent Classification (CPC):
**C08C 19/00; C08K 3/04; C08L 33/08**

(86) International application number:
**PCT/JP2023/027442**

(87) International publication number:
**WO 2024/024858 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.07.2022 JP 2022121396**

(71) Applicant: **Zeon Corporation
Tokyo 100-8246 (JP)**

(72) Inventors:
• **ODAGAWA, Yoshiyuki**
  **Tokyo 100-8246 (JP)**
• **FUJITA, Yuki**
  **Tokyo 100-8246 (JP)**

(74) Representative: **Maiwald GmbH
Elisenhof
Elisenstraße 3
80335 München (DE)**

(54) **ACRYLIC RUBBER COMPOSITION AND RUBBER CROSSLINKED PRODUCT**

(57)     Provided is an acrylic rubber composition comprising an acrylic rubber having a glass transition temperature of -29°C or lower, and a carbon black having a nitrogen adsorption specific surface area-to-iodine adsorption amount ratio of $1.00 \times 10^3$ m²/g or greater and a nitrogen adsorption specific surface area of 25 m²/g or greater.

EP 4 563 649 A1

**Description**

TECHNICAL FIELD

The present invention relates to an acrylic rubber composition which has excellent roll processability and can provide a cross-linked rubber having excellent cold resistance and tensile strength, and a cross-linked rubber.

BACKGROUND ART

Rubber products having performance varied according to applications have been developed so far. For example, Patent Document 1 discloses an acrylic rubber composition used in heat-resistant hoses.

In the technique described in Patent Document 1, an acrylic rubber composition for heat-resistant hoses containing carbon black and having high electric resistance and high strength is disclosed. However, the acrylic rubber composition is still susceptible to improvement in roll processability thereof and cold resistance and tensile strength of a cross-linked rubber to be obtained from the acrylic rubber composition.

RELATED ART DOCUMENTS

PATENT DOCUMENTS

Patent Document 1: JP 2016-150525 A

SUMMARY OF THE INVENTION

PROBLEM TO BE SOLVED BY THE INVENTION

The present invention has been made in consideration of such circumstances, and an object of the present invention is to provide a rubber composition which has excellent roll processability and can provide a cross-linked rubber having excellent cold resistance and tensile strength, and a cross-linked rubber obtained by cross-linking such a rubber composition.

MEANS FOR SOLVING PROBLEMS

The present inventors, who have conducted extensive research, have found that the above object can be achieved by an acrylic rubber composition containing a carbon black having a nitrogen adsorption specific surface area-to-iodine adsorption amount ratio of $1.00 \times 10^3$ m$^2$/g or greater and a nitrogen adsorption specific surface area of 25 m$^2$/g or greater, and thus have completed the present invention.

Specifically, Mode 1 according to the present invention provides an acrylic rubber composition comprising an acrylic rubber having a glass transition temperature of -29°C or lower, and carbon having a nitrogen adsorption specific surface area-to-iodine adsorption amount ratio of $1.00 \times 10^3$ m$^2$/g or greater and a nitrogen adsorption specific surface area of 25 m$^2$/g or greater.

Mode 2 according to the present invention provides an acrylic rubber composition comprising an acrylic rubber, a carbon black having a nitrogen adsorption specific surface area-to-iodine adsorption amount ratio of $1.00 \times 10^3$ m$^2$/g or greater and a nitrogen adsorption specific surface area of 25 m$^2$/g or greater, and a plasticizer, wherein the content of the plasticizer is 3 parts by weight or more relative to 100 parts by weight of rubber components containing the acrylic rubber.

Mode 3 according to the present invention provides the acrylic rubber composition according to Mode 1 further comprising a plasticizer.

Mode 4 according to the present invention provides the acrylic rubber composition according to any one of Modes 1 to 3, wherein the carbon black has a nitrogen adsorption specific surface area of 25 to 60 m$^2$/g, and has a nitrogen adsorption specific surface area-to-iodine adsorption amount ratio of $1.10 \times 10^3$ to $1.50 \times 10^3$ m$^2$/g.

Mode 5 according to the present invention provides the acrylic rubber composition according to any one of Modes 1 to 4, wherein the carbon black has a DBP absorption amount of 90 to 180 cm$^3$/100 g.

Mode 6 according to the present invention provides the acrylic rubber composition according to any one of Modes 1 to 5, wherein when the carbon black gives a nuclear magnetic resonance signal in a spin-spin relaxation process observed by a solid echo method, the nuclear magnetic resonance signal being represented by a sum of a first signal and a second signal having a time constant greater than that of the first signal, the hydrogen content in the carbon black represented by a signal intensity per unit mass at Time 0 of the first signal is 150 to 250/g.

Mode 7 according to the present invention provides the acrylic rubber composition according to any one of Modes 1 to 6, wherein the carbon black gives a Raman scattering peak appearing in the range of 1340 to 1360 cm$^{-1}$ having a full width at a half maximum ΔD of 260 to 290 cm$^{-1}$ where the excitation wavelength is 532 nm.

Mode 8 according to the present invention provides the acrylic rubber composition according to Mode 1 or 2, wherein the carbon black has a nitrogen adsorption specific surface area of 25 to 60 m$^2$/g, a nitrogen adsorption specific surface area-to-iodine adsorption amount ratio of $1.10 \times 10^3$ to $1.50 \times 10^3$ m$^2$/g, and a DBP absorption amount of 90 to 180 cm$^3$/100 g, and when the carbon black gives a nuclear magnetic resonance signal in a spin-spin relaxation process observed by a solid echo method, the nuclear magnetic resonance signal being represented by a sum of a first signal and a second signal having a time constant greater than that of the first signal, the hydrogen content in the carbon black represented by a signal intensity per unit mass at Time 0 of the first signal is 150 to 250/g, and the carbon black gives a Raman scattering peak appearing in the range of 1340 to 1360 cm$^{-1}$ having a full width at a half maximum ΔD of 260 to 290 cm$^{-1}$ where the excitation wavelength is 532 nm.

Mode 9 according to the present invention provides a cross-linked rubber obtained by cross-linking the acrylic rubber composition according to any one of Modes 1 to 8 with an amine compound.

EFFECTS OF THE INVENTION

The present invention provides an acrylic rubber composition which has excellent roll processability and can provide a cross-linked rubber having excellent cold resistance and tensile strength, and a cross-linked rubber obtained by cross-linking such an acrylic rubber composition.

DESCRIPTION OF EMBODIMENTS

<<First embodiment>>

The acrylic rubber composition according to a first embodiment of the present invention comprises an acrylic rubber having a glass transition temperature of -29°C or lower, and a carbon black having a nitrogen adsorption specific surface area-to-iodine adsorption amount ratio of $1.00 \times 10^3$ m$^2$/g or greater and having a nitrogen adsorption specific surface area of 25 m$^2$/g or greater.

<Acrylic rubber>

The acrylic rubber used in the present invention refers to a rubbery polymer comprising an (meth)acrylic acid ester monomer unit as a main component (which refers to a component occupying preferably 30% by weight or more of the total monomer units in the acrylic rubber) in the molecule (where the term (meth)acrylic acid ester monomer means an acrylate ester monomer and/or a methacrylic acid ester monomer. Hereinafter, the same holds for methyl (meth)acrylate and others.).

Examples of (meth)acrylic acid ester monomers which form the (meth)acrylic acid ester monomer unit as the main component of the acrylic rubber used in the present invention include, but should not be limited to, alkyl (meth)acrylate ester monomers, alkoxyalkyl (meth)acrylate ester monomers, and the like.

Although alkyl (meth)acrylate ester monomers are not particularly limited, preferred are (meth)acrylic acid esters of C$_1$ to C$_{12}$ alkanols ((meth)acrylic acid esters having a C$_1$ to C$_{12}$ alkyl group), more preferred are (meth)acrylic acid esters of C$_1$ to C$_8$ alkanols ((meth)acrylic acid esters having a C$_1$ to C$_8$ alkyl group), and still more preferred are (meth)acrylic acid esters of C$_2$ to C$_6$ alkanols ((meth)acrylic acid esters having a C$_2$ to C$_6$ alkyl group).

Specific examples of such alkyl (meth)acrylate ester monomers include methyl (meth)acrylate, ethyl (meth)acrylate, n-propyl (meth)acrylate, isopropyl (meth)acrylate, n-butyl (meth)acrylate, isobutyl (meth)acrylate, n-hexyl (meth)acrylate, 2-ethylhexyl (meth)acrylate, cyclohexyl (meth)acrylate, and the like. Among these, preferred are ethyl (meth)acrylate and n-butyl (meth)acrylate, and more preferred are ethyl acrylate and n-butyl acrylate. These can be used alone or in combination.

Although alkoxyalkyl (meth)acrylate ester monomers are not particularly limited, preferred are (meth)acrylic acid esters of C$_2$ to C$_{12}$ alkoxyalkyl alcohols ((meth)acrylic acid esters having a C$_2$ to C$_{12}$ alkoxyalkyl group), more preferred are (meth)acrylic acid esters of C$_2$ to C$_8$ alkoxyalkyl alcohols ((meth)acrylic acid esters having a C$_2$ to C$_8$ alkoxyalkyl group), and still more preferred are (meth)acrylic acid esters of C$_2$ to C$_6$ alkoxyalkyl alcohols ((meth)acrylic acid esters having a C$_2$ to C$_6$ alkoxyalkyl group).

Specific examples of such alkoxyalkyl (meth)acrylate ester monomers include methoxymethyl (meth)acrylate, ethoxymethyl (meth)acrylate, 2-methoxyethyl (meth)acrylate, 2-ethoxyethyl (meth)acrylate, 2-propoxyethyl (meth)acrylate, 2-butoxyethyl (meth)acrylate, 3-methoxypropyl (meth)acrylate, 4-methoxybutyl (meth)acrylate, and the like. Among these, preferred are 2-ethoxyethyl (meth)acrylate and 2-methoxyethyl (meth)acrylate, and particularly preferred are 2-ethoxyethyl acrylate and 2-methoxyethyl acrylate. These can be used alone or in combination.

The amount of the (meth)acrylic acid ester monomer unit is preferably 50% by weight or more, more preferably 60% by weight or more, still more preferably 70 to 99.9% by weight, further still more preferably 80 to 99.5% by weight, particularly preferably 90 to 99% by weight in the total monomer units in the acrylic rubber used in the present invention. An excessively small amount of the (meth)acrylic acid ester monomer unit may result in reduced weatherability, heat resistance, and oil resistance of a cross-linked rubber to be obtained.

Preferably, the acrylic rubber used in the present invention contains at least an alkoxyalkyl (meth)acrylate ester monomer unit as the (meth)acrylic acid ester monomer unit. When the acrylic rubber used in the present invention contains an alkoxyalkyl (meth)acrylate ester monomer unit, a cross-linked rubber having excellent cold resistance and engine oil resistance can be obtained. When the acrylic rubber contains the alkoxyalkyl (meth)acrylate ester monomer unit, the effect of suppressing occurrence of coloring and an odor can be further enhanced. The amount of the alkoxyalkyl (meth)acrylate ester monomer unit is preferably 1 to 70% by weight, more preferably 1 to 60% by weight, still more preferably 5 to 60% by weight, particularly preferably 5 to 50% by weight in the total monomer units in the acrylic rubber used in the present invention.

The acrylic rubber used in the present invention may contain a cross-linkable monomer unit as needed in addition to the (meth)acrylic acid ester monomer unit. Examples of cross-linkable monomers forming the cross-linkable monomer unit include, but should not be limited to, monomers having a reactive polar functional group, such as $\alpha,\beta$-ethylenically unsaturated carboxylic acid monomers, monomers having an epoxy group, and monomers having a halogen atom; diene monomers; and the like. From the viewpoint of crosslinkability, preferred cross-linkable monomers are monomers having a reactive polar functional group. Among these monomers having a reactive polar functional group, more preferred are $\alpha,\beta$-ethylenically unsaturated carboxylic acid monomers, monomers having an epoxy group, and monomers having a halogen atom, still more preferred are $\alpha,\beta$-ethylenically unsaturated carboxylic acid monomers and monomers having a halogen atom, and particularly preferred are $\alpha,\beta$-ethylenically unsaturated carboxylic acid monomers.

Examples of the $\alpha,\beta$-ethylenically unsaturated carboxylic acid monomers include, but should not be limited to, $\alpha,\beta$-ethylenically unsaturated monocarboxylic acids, $\alpha,\beta$-ethylenically unsaturated dicarboxylic acids, and monoesters of $\alpha,\beta$-ethylenically unsaturated dicarboxylic acid, and the like. When an $\alpha,\beta$-ethylenically unsaturated carboxylic acid monomer is used, the acrylic rubber can be obtained as a carboxyl group-containing acrylic rubber having a carboxyl group as a cross-linking point, which in turn, can be formed into a cross-linked rubber having further enhanced compression set resistance.

Although not particularly limited, preferred $\alpha,\beta$-ethylenically unsaturated monocarboxylic acids are $C_3$ to $C_{12}$ $\alpha,\beta$-ethylenically unsaturated monocarboxylic acids. Specific examples thereof include acrylic acid, methacrylic acid, $\alpha$-ethylacrylic acid, crotonic acid, cinnamic acid, and the like.

Although not particularly limited, preferred $\alpha,\beta$-ethylenically unsaturated dicarboxylic acids are $C_4$ to $C_{12}$ $\alpha,\beta$-ethylenically unsaturated dicarboxylic acids. Specific examples thereof include butenedioic acids such as fumaric acid and maleic acid; itaconic acid; citraconic acid; chloromaleic acid; and the like.

Although not particularly limited, preferred monoesters of $\alpha,\beta$-ethylenically unsaturated dicarboxylic acids are monoesters of $C_4$ to $C_{12}$ $\alpha,\beta$-ethylenically unsaturated dicarboxylic acids and $C_1$ to $C_{12}$ alkanols. More preferred are monoesters of $C_4$ to $C_6$ $\alpha,\beta$-ethylenically unsaturated dicarboxylic acids and $C_2$ to $C_8$ alkanols, and still more preferred are monoesters of $C_4$ butenedioic acid and $C_2$ to $C_6$ alkanols. Specific examples of the monoesters of $\alpha,\beta$-ethylenically unsaturated dicarboxylic acids include linear monoalkyl esters of butenedioic acid, such as monomethyl fumarate, monoethyl fumarate, mono-n-butyl fumarate, monomethyl maleate, monoethyl maleate, and mono-n-butyl maleate; butenedioic acid monoesters having an alicyclic structure, such as monocyclopentyl fumarate, monocyclohexyl fumarate, monocyclohexenyl fumarate, monocyclopentyl maleate, monocyclohexyl maleate, and monocyclohexenyl maleate; itaconic acid monoesters, such as monomethyl itaconate, monoethyl itaconate, mono-n-butyl itaconate, and monocyclohexyl itaconate; and the like.

Among these, preferred are $\alpha,\beta$-ethylenically unsaturated dicarboxylic acid monoesters, more preferred are linear monoalkyl esters of butenedioic acid and butenedioic acid monoesters having an alicyclic structure, still more preferred are mono-n-butyl fumarate, mono-n-butyl maleate, monocyclohexyl fumarate, and monocyclohexyl maleate, and particularly preferred is mono-n-butyl fumarate. These $\alpha,\beta$-ethylenically unsaturated carboxylic acid monomers can be used alone or in combination. Among these monomers listed above, the dicarboxylic acids include those present as anhydrides thereof.

Examples of the monomers having an epoxy group include, but should not be limited to, epoxy group-containing (meth)acrylic acid esters such as (meth)glycidyl acrylate; epoxy group-containing ethers such as allyl glycidyl ether and vinyl glycidyl ether; and the like.

Examples of the monomers having a halogen atom include, but should not be limited to, unsaturated alcohol esters of halogen-containing saturated carboxylic acids, haloalkyl (meth)acrylates, haloacyloxyalkyl (meth)acrylates, (haloacetylcarbamoyloxy)alkyl (meth)acrylates, halogen-containing unsaturated ethers, halogen-containing unsaturated ketones, halomethyl group-containing aromatic vinyl compounds, halogen-containing unsaturated amides, and haloacetyl group-containing unsaturated monomers, and the like. Note that preferred halogen atom-containing monomers are those containing a chlorine atom as a halogen atom.

Specific examples of unsaturated alcohol esters of halogen-containing saturated carboxylic acids include vinyl chloroacetate, vinyl 2-chloropropionate, allyl chloroacetate, and the like.

Specific examples of haloalkyl (meth)acrylates include chloromethyl (meth)acrylate, 1-chloroethyl (meth)acrylate, 2-chloroethyl (meth)acrylate, 1,2-dichloroethyl (meth)acrylate, 2-chloropropyl (meth)acrylate, 3-chloropropyl (meth)acrylate, 2,3-dichloropropyl (meth)acrylate, and the like.

Specific examples of haloacyloxyalkyl (meth)acrylates include 2-(chloroacetoxy)ethyl (meth)acrylate, 2-(chloroacetoxy)propyl (meth)acrylate, 3-(chloroacetoxy)propyl (meth)acrylate, 3-(hydroxychloroacetoxy)propyl (meth)acrylate, and the like.

Specific examples of (haloacetylcarbamoyloxy)alkyl (meth)acrylates include 2-(chloroacetylcarbamoyloxy)ethyl (meth)acrylate, 3-(chloroacetylcarbamoyloxy)propyl (meth)acrylate, and the like.

Specific examples of halogen-containing unsaturated ethers include chloromethylvinyl ether, 2-chloroethylvinyl ether, 3-chloropropylvinyl ether, 2-chloroethylallyl ether, 3-chloropropylallyl ether, and the like.

Specific examples of halogen-containing unsaturated ketones include 2-chloroethylvinyl ketone, 3-chloropropylvinyl ketone, 2-chloroethylallyl ketone, and the like.

Specific examples of halomethyl group-containing aromatic vinyl compounds include p-chloromethylstyrene, m-chloromethylstyrene, o-chloromethylstyrene, p-chloromethyl-$\alpha$-methylstyrene, and the like.

Specific examples of halogen-containing unsaturated amides include N-chloromethyl (meth)acrylamide, and the like.

Specific examples of haloacetyl group-containing unsaturated monomers include 3-(hydroxychloroacetoxy) propyl allyl ether, p-vinylbenzyl chloroacetate, and the like.

Examples of diene monomers include conjugated diene monomers and non-conjugated diene monomers.

Specific examples of the conjugated diene monomers include 1,3-butadiene, isoprene, piperylene, and the like.

Specific examples of the non-conjugated diene monomers include ethylidene norbornene, dicyclopentadiene, dicyclopentadienyl (meth)acrylate, 2-dicyclopentadienylethyl (meth)acrylate, and the like.

The amount of the cross-linkable monomer unit is preferably 0.01% by weight or more, more preferably 0.01 to 20% by weight, still more preferably 0.1 to 10% by weight, further still more preferably 0.5 to 5% by weight, particularly preferably 1 to 3% by weight in the total monomer units in the acrylic rubber used in the present invention. The presence of the cross-linkable monomer unit within the ranges above enables formation of a cross-linked rubber having favorable mechanical properties and heat resistance and having more appropriately enhanced compression set resistance.

In addition to the (meth)acrylic acid ester monomer unit and the cross-linkable monomer unit used as needed, the acrylic rubber used in the present invention may contain units of an additional monomer copolymerizable therewith. Examples of such an additional monomer copolymerizable with the above monomers include, but should not be limited to, aromatic vinyl monomers, $\alpha,\beta$-ethylenically unsaturated nitrile monomers, acrylamide monomers, $\alpha,\beta$-ethylenically unsaturated dicarboxylic acid diester monomers, other olefin monomers, and the like.

Examples of the aromatic vinyl monomers include styrene, $\alpha$-methylstyrene, divinylbenzene, and the like.

Examples of the $\alpha,\beta$-ethylenically unsaturated nitrile monomers include acrylonitrile, methacrylonitrile, and the like.

Examples of the acrylamide monomers include acrylamide, methacrylamide, and the like.

Examples of $\alpha,\beta$-ethylenically unsaturated dicarboxylic acid diester monomers include maleic acid dialkyl esters having $C_1$ to $C_{18}$ alkyl groups, such as dimethyl maleate and di-n-butyl maleate; fumaric acid dialkyl esters having $C_1$ to $C_{18}$ alkyl groups, such as dimethyl fumarate and di-n-butyl fumarate; maleic acid dicycloalkyl esters having $C_4$ to $C_{16}$ cycloalkyl groups, such as dicyclopentyl maleate and dicyclohexyl maleate; fumaric acid dicycloalkyl esters having $C_4$ to $C_{16}$ cycloalkyl groups, such as dicyclopentyl fumarate and dicyclohexyl fumarate; itaconic acid dialkyl esters having $C_1$ to $C_{18}$ alkyl groups, such as dimethyl itaconate and di-n-butyl itaconate; itaconic acid dicycloalkyl esters having $C_4$ to $C_{16}$ cycloalkyl groups, such as dicyclohexyl itaconate; and the like.

Examples of other olefin monomers include ethylene, propylene, vinyl chloride, vinylidene chloride, vinyl acetate, ethyl vinyl ether, butyl vinyl ether, and the like.

Among these additional copolymerizable monomers, preferred are styrene, acrylonitrile, methacrylonitrile, ethylene, and vinyl acetate, and more preferred are acrylonitrile, methacrylonitrile, and ethylene.

These copolymerizable additional monomers can be used alone or in combination. The amount of units of these copolymerizable additional monomers is preferably 49.9% by weight or less, more preferably 29.9% by weight or less, still more preferably 15% by weight or less, further still more preferably 9% by weight or less, particularly preferably 4.5% by weight or less of the monomer units in the acrylic rubber used in the present invention.

When the acrylic rubber used in the present invention contains units of the copolymerizable additional monomer(s), the content thereof can be controlled within the ranges above. Especially, when ethylene units are present, the amount of ethylene units is preferably 9% by weight or less, more preferably 4.5% by weight or less of the monomer units in the acrylic rubber used in the present invention. Likewise, when the acrylic rubber used in the present invention contains acrylonitrile units and methacrylonitrile units, the total content of acrylonitrile units and methacrylonitrile units is preferably 9% by weight or less, more preferably 4.5% by weight or less.

The acrylic rubber used in the present invention can be obtained by polymerizing the monomers described above. As a type of the polymerization reaction, any method of emulsion polymerization, suspension polymerization, bulk polymerization, and solution polymerization can be used. From the viewpoint of ease in control of the polymerization reaction, preferred is emulsion polymerization under normal pressure, which is usually used as a conventionally known method of producing acrylic rubber.

Emulsion polymerization may be performed by any one of a batchwise method, a semi-batchwise method, and a continuous method. The polymerization is performed in the temperature range of usually 0 to 70°C, preferably 5 to 50°C. The total amount of all the above-mentioned monomers need not always be fed to the reaction system from the start of the reaction. In consideration of the copolymerization reactivity ratio, the reaction conversion ratio, and the like, these monomers may be continuously or intermittently added over the entire reaction time, or may be introduced in batch or in portions in the middle or latter stage. Although the proportions of the above-mentioned monomers charged in the polymerization reaction can be adjusted according to the reactivities of the monomers, the polymerization reaction often progresses approximately quantitatively. In consideration of such circumstances, the proportions thereof charged can be determined according to the monomer unit composition of the acrylic rubber to be produced. After the polymerization, solidification and then drying are performed, giving a solid acrylic rubber.

The acrylic rubber used in the present invention has a glass transition temperature (Tg) of -29°C or lower, preferably -30°C or lower, more preferably -32°C or lower. Although not particularly limited, the lower limit of the glass transition temperature of the acrylic rubber is preferably -80°C or higher, preferably -60°C or higher, more preferably -40°C or higher. When the glass transition temperature (Tg) falls within the ranges above, the acrylic rubber can have heat resistance and cold resistance in a better balance.

The acrylic rubber used in the present invention may contain a phenolic antioxidant as an antioxidant. The phenolic antioxidant can be any compound without limitation as long as it has a phenol structure (namely, a structure having a benzene ring and an OH group bonded to the benzene ring). Examples of the phenolic antioxidant include sterically hindered phenolic antioxidants, semi-hindered phenolic antioxidants, less hindered phenolic antioxidants, phenolic antioxidants having no hindered group, and the like.

The acrylic rubber used in the present invention has a pH of preferably 6 or less, more preferably 2 to 6, still more preferably 2.5 to 5.5, particularly preferably 3 to 5, although not particularly limited thereto. When the pH falls within the ranges above, an acrylic rubber composition having further enhanced storage stability can be obtained.

From the viewpoint of providing more favorable mechanical strength and processability, the weight average molecular weight (Mw) of the acrylic rubber contained acrylic rubber composition according to the present invention is preferably 800,000 or more, more preferably 800,000 to 2,600,000, still more preferably 900,000 to 2,300,000, particularly preferably 1,000,000 to 2,000,000, although not particularly limited. Although the molecular weight distribution of the acrylic rubber is not particularly limited, the value of Mw/Mn is preferably 1.50 to 10.0, more preferably 1.70 to 8.00, still more preferably 2.00 to 6.00, and the value of Mz/Mw is preferably 1.30 to 3.00, more preferably 1.45 to 2.70, still more preferably 1.60 to 2.50. The weight average molecular weight of the acrylic rubber and the molecular weight distribution thereof can be determined as an absolute molecular weight and an absolute molecular weight distribution by a GPC-MALS method using a gel permeation chromatograph (GPC) provided with a multi-angle laser light scattering (MALS) detector, for example.

<Acrylic rubber composition>

The acrylic rubber composition according to the present invention comprises rubber components containing the above-mentioned acrylic rubber, and a carbon black having a nitrogen adsorption specific surface area-to-iodine adsorption amount ratio of $1.00 \times 10^3 \, m^2/g$ or greater and a nitrogen adsorption specific surface area of 25 $m^2/g$ or greater.

The proportion of the acrylic rubber component in the rubber components contained in the acrylic rubber composition can be appropriately selected according to the purpose of usage, and is preferably 30% by weight or more, more preferably 50% by weight or more, still more preferably 70% by weight or more, particularly preferably 100% by weight (that is, an embodiment where the rubber components contain substantially only an acrylic rubber component).

Examples of rubbers other than the acrylic rubber used in the present invention in the rubber components include, but should not be limited to, acrylic rubber other than the acrylic rubber used in the present invention, natural rubber, polybutadiene rubber, polyisoprene rubber, styrene-butadiene rubber, acrylonitrile-butadiene rubber, silicon rubber, fluorocarbon rubber, olefin elastomers, styrene elastomers, vinyl chloride elastomers, polyester elastomers, polyamide elastomers, polyurethane elastomers, polysiloxane elastomers, and the like.

These rubbers other than the acrylic rubber can be used alone or in combination. Although the acrylic rubber used in the present invention and the rubber other than the acrylic rubber used in the present invention can have any form, these rubbers may have any of a bale form, a sheet form, a powder form, and the like.

The carbon black used in the present invention has a nitrogen adsorption specific surface area-to-iodine adsorption amount ratio of $1.00 \times 10^3$ m²/g or greater, preferably $1.10 \times 10^3$ m²/g or greater, more preferably $1.20 \times 10^3$ m²/g or greater, particularly preferably $1.30 \times 10^3$ m²/g or greater. The upper limit of the nitrogen adsorption specific surface area-to-iodine adsorption amount ratio of the carbon black is preferably $1.50 \times 10^3$ m²/g or smaller, more preferably $1.40 \times 10^3$ m²/g or smaller, although not particularly limited. The nitrogen adsorption specific surface area-to-iodine adsorption amount ratio represents the surface activity of the carbon black. When the carbon black has a nitrogen adsorption specific surface area-to-iodine adsorption amount ratio in the ranges above, the acrylic rubber composition can have excellent roll processability, and a cross-linked rubber having high tensile strength can be obtained.

The nitrogen adsorption specific surface area of the carbon black is 25 m²/g or greater, preferably 35 m²/g or greater, more preferably 45 m²/g or greater. The upper limit of the nitrogen adsorption specific surface area of the carbon black is preferably 60 m²/g or smaller, more preferably 55 m²/g or smaller, although not particularly limited. The nitrogen adsorption specific surface area of the carbon black can be measured according to JIS K6217-7:2013.

The iodine adsorption amount of the carbon black is preferably 60 mg/g or smaller, more preferably 50 mg/g or smaller. The lower limit of the iodine adsorption amount of the carbon black is preferably 17 mg/g or larger, more preferably 30 mg/g or larger, although not particularly limited. The iodine adsorption amount of the carbon black can be measured according to JIS K6217-1997.

The DBP absorption amount of the carbon black is preferably 90 to 180 cm³/100 g, more preferably 115 to 135 cm³/100 g. The DBP absorption amount represents the structure (aggregation degree) of the carbon black, and can be measured according to JIS K 6217-1997. When the DBP absorption amount falls within the ranges above, the acrylic rubber composition can have excellent roll processability, and a cross-linked rubber having high tensile strength can be obtained.

Preferably, the hydrogen content in the carbon black determined by a nuclear magnetic resonator (NMR) is 150 to 250/g. When the hydrogen content in the carbon black falls within the ranges above, the carbon black can have improved dispersibility, and a cross-linked rubber having high tensile strength can be obtained.

The hydrogen content in the carbon black can be determined by the following method. Initially, using Minispec mq20 available from Bruker BioSpin Corp. as a pulse nuclear magnetic resonator, carbon black is dried at 110°C for 30 minutes, and 0.2 g of the carbon black is charged into a glass sample tube as a measurement sample. Then, the spin-spin relaxation time (transverse relaxation time) T2 is measured under the following measurement conditions to obtain a T2 relaxation curve (free induction decay curve).

<Measurement conditions>

measurement nucleus species: 1H, pulse mode: solid echo method (90° $\times$ -γ-90°y), 90°, pulse width: 2.7 μs, measurement time: 2 ms, wait time: 500 ms, cumulated number: 52 times, measurement temperature: 40°C, gain: 90

The mass of the carbon black is fixed to 0.2 g and the function of the apparatus is fixed (Gain = 90). Thus, the signal intensity of the T2 relaxation curve (free induction decay curve) to be obtained will increase or decrease in proportion to the 1H concentration of the measurement target.

Next, the obtained free induction decay curve is fitted by a method of linear least squares using fitting software (TD-NMR-A for Windows7) attached to the pulse nuclear magnetic resonator, giving an approximate curve represented by the following formula f(t):

$$f(t) = A(1)\exp(-t/T2(1)) + A(2)\exp(-t/T2(2))$$

Here, T2(1) indicates the relaxation time of the component having a short relaxation time, T2(2) indicates the relaxation time of the component having a long relaxation time, A(1) indicates the signal intensity at t=0 of the component having a short relaxation time, and A(2) indicates the signal intensity at t=0 of the component having a long relaxation time.

Finally, the signal intensity A(1) is divided by the mass (g) of the measurement sample. Thus, the hydrogen content in the carbon black can be obtained.

From the difference in time constant, the signal intensity A(1) can be specified as the hydrogen atom on the surface of carbon black, and the signal intensity A(2) can be specified as the moisture, a liquid polycyclic aromatic hydrocarbon compound, or the like adsorbing on the surface of carbon black. The signal intensity A(1) corresponds to the "first signal" in the present invention, and the signal intensity A(2) corresponds to the "second signal" in the present invention.

The carbon black used as a reference in the measurement of the hydrogen content is SEAST 9 (trade name) available from Tokai Carbon Co., Ltd., and the hydrogen content is 114/g. After the measurement condition affecting the signal intensity is adjusted such that the hydrogen content in SEAST 9 is 114/g, the hydrogen content in the carbon black used in the present invention is determined.

Preferably, in the Raman spectrum obtained from measurement of the carbon black at an excitation wavelength of 532 nm using a laser Raman spectroscope, the full width at a half maximum ΔD of a Raman scattering peak appearing in the range of 1340 to 1360 cm$^{-1}$ is 260 to 290 cm$^{-1}$. ΔD represents the degree of disorder, that is, crystallinity of the crystal structure on the surface of carbon black. When ΔD falls within the ranges above, the carbon black can have high dispersibility, the acrylic rubber composition can have excellent roll processability, and a cross-linked rubber having excellent tensile strength can be obtained.

ΔD can be measured by the following method. Initially, carbon black is measured at an excitation wavelength of 532 nm by laser Raman spectroscopy to obtain a Raman spectrum. In the obtained Raman spectrum, the measurement wavelength at a peak top position in the range of 1340 to 1360 cm$^{-1}$ is defined as Dmax (cm$^{-1}$), and the detection position on a lower wavelength side corresponding to a detected intensity which is a half of the peak intensity at Dmax is defined as D50 (cm$^{-1}$). ΔD can be calculated from the formula (1) below:

$$\Delta D = (Dmax - D50) \times 2 \quad (1)$$

The carbon black as the reference used in the measurement by Raman spectroscopy is SEAST G-SO(trade name) available from Tokai Carbon Co., Ltd., and the value of ΔD is 249 cm$^{-1}$. After the measurement condition affecting ΔD is adjusted such that ΔD of SEAST G-SO is 249 cm$^{-1}$, ΔD of the carbon black used in the present invention is determined.

The content of the carbon black in the acrylic rubber composition is preferably 5 to 100 parts by weight, more preferably 10 to 70, still more preferably 50 to 70 relative to 100 parts by weight of the rubber components containing the acrylic rubber, although not particularly limited.

The acrylic rubber composition according to the present invention contains a carbon black having the above-mentioned properties. An acrylic rubber composition comprising an acrylic rubber having a glass transition temperature of -29°C or lower and a carbon black usually used in the acrylic rubber tends to have reduced roll processability. In contrast, in the present invention, even when the above-mentioned carbon black is combined with an acrylic rubber having a glass transition temperature of -29°C or lower, use of such a carbon black enables an enhancement in roll processability of the acrylic rubber composition, and thus a cross-linked rubber having excellent tensile strength can be obtained.

The acrylic rubber composition according to the present invention may contain a reinforcing filler and a non-reinforcing filler in addition to the above-mentioned carbon black.

Examples of the reinforcing filler include carbon blacks such as furnace black, acetylene black, thermal black, channel black, and graphite; silicas such as wet silica, dry silica, and colloidal silica; and the like. Examples of the non-reinforcing filler include quartz powder, clay such as diatomite, zinc oxide, basic magnesium carbonate, active calcium carbonate, magnesium silicate, aluminum silicate, titanium dioxide, talc, aluminum sulfate, calcium sulfate, barium sulfate, and the like. Unlike the carbon black used in the present invention, the carbon black used as a reinforcing filler does not satisfy the above-mentioned requirements for the nitrogen adsorption specific surface area-to-iodine adsorption amount ratio, the nitrogen adsorption specific surface area, the iodine adsorption amount, the DBP absorption amount, the hydrogen content determined by NMR, and the full width at a half maximum ΔD of the Raman scattering peak.

These carbon blacks and other fillers can be used alone or in combination. The content of the carbon black and other fillers in the acrylic rubber composition according to the present invention is preferably 1 to 200 parts by weight, more preferably 10 to 150 parts by weight, still more preferably 20 to 100 parts by weight relative to 100 parts by weight of the rubber components in the acrylic rubber composition, although not particularly limited.

The acrylic rubber composition according to the present invention has a Mooney viscosity (ML1+4, 100°C) of preferably 10 to 80, more preferably 20 to 70, still more preferably 30 to 60. When the Mooney viscosity of the acrylic rubber composition falls within the ranges above, the acrylic rubber composition can have roll processability and strength properties in a better balance.

Preferably, the acrylic rubber composition according to the present invention further comprises a plasticizer. The plasticizer can be any plasticizer usually used for rubber, and is not particularly limited. Preferably, the plasticizer is an ester compound of a dicarboxylic acid with an ether bond-containing alcohol. Examples of such a plasticizer include adipic acid ether ester-based plasticizers, and the like.

The content of the plasticizer in the acrylic rubber composition is preferably 0 to 40 parts by weight, more preferably 1 to 30 parts by weight, still more preferably 3 to 20 parts by weight relative to 100 parts by weight of the rubber components containing the acrylic rubber. When the content of the plasticizer in the acrylic rubber composition falls within the ranges above, a cross-linked rubber having excellent cold resistance can be obtained.

Preferably, the acrylic rubber composition according to the present invention further comprises a cross-linking agent. Any cross-linking agent can be used without limitation, and conventionally known cross-linking agents can be used: for example, polyvalent amine compounds, such as diamine compounds, and carbonates thereof; sulfur; sulfur donors; triazinethiol compounds; polyvalent epoxy compounds; organic carboxylic ammonium salts; organic peroxides; metal salts of dithiocarbamic acids; polyvalent carboxylic acids; quaternary onium salts; imidazole compounds; isocyanuric acid compounds; and the like. These cross-linking agents can be used alone or in combination. Among these, polyvalent amine compounds and carbonates thereof are preferably used.

The content of the cross-linking agent in the acrylic rubber composition is preferably 0 to 5 parts by weight, more preferably 0.1 to 3 parts by weight, still more preferably 0.2 to 1 part by weight relative to 100 parts by weight of the rubber components containing the acrylic rubber. When the content of the cross-linking agent falls within the ranges above, a cross-linked rubber having more excellent tensile strength can be obtained.

Any polyvalent amine compounds and carbonates thereof can be used without limitation. Preferred are $C_4$ to $C_{30}$ polyvalent amine compounds and carbonates thereof. Examples of such polyvalent amine compounds and carbonates thereof include aliphatic polyvalent amine compounds and carbonates thereof, aromatic polyvalent amine compounds, and the like.

Examples of the aliphatic polyvalent amine compounds and carbonates thereof include, but should not be limited to, hexamethylenediamine, hexamethylenediamine carbamate, N,N'-dicinnamylidene-1,6-hexanediamine, and the like. Among these, preferred is hexamethylenediamine carbamate.

Examples of aromatic polyvalent amine compounds include, but should not be limited to, 4,4'-methylenedianiline, p-phenylenediamine, m-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2-bis[4-(4-aminophenoxy)phenyl]propane, 4,4'-diaminobenzanilide, 4,4'-bis(4-aminophenoxy)biphenyl, m-xylylenediamine, p-xylylenediamine, 1,3,5-benzenetriamine, and the like. Among these, preferred is 2,2'-bis[4-(4-aminophenoxy)phenyl]propane.

It is also preferred that the rubber composition according to the present invention further comprise a cross-linking accelerator. Any cross-linking accelerator can be used without limitation. When the acrylic rubber according to the present invention has a carboxyl group as the cross-linkable group and the cross-linking agent is a polyvalent amine compound or a carbonate thereof, guanidine compounds, diazabicycloalkene compounds, imidazole compounds, quaternary onium salts, tertiary phosphine compounds, aliphatic monovalent secondary amine compounds, aliphatic monovalent tertiary amine compounds, and the like can be used. Among these, preferred are guanidine compounds, diazabicycloalkene compounds, and aliphatic monovalent secondary amine compounds, and particularly preferred are guanidine compounds and diazabicycloalkene compounds. These basic cross-linking accelerators can be used alone or in combination.

Specific examples of guanidine compounds include 1,3-di-o-tolylguanidine, 1,3-diphenylguanidine, and the like. Specific examples of diazabicycloalkene compounds include 1,8-diazabicyclo[5.4.0]undec-7-ene, 1,5-diazabicyclo[4.3.0]non-5-ene, and the like. Specific examples of imidazole compounds include 2-methylimidazole, 2-phenylimidazole, and the like. Specific examples of quaternary onium salts include tetra-n-butylammonium bromide, octadecyltri-n-butylammonium bromide, and the like. Specific examples of tertiary phosphine compounds include triphenylphosphine, tri-p-tolylphosphine, and the like.

The aliphatic monovalent secondary amine compounds are compounds where two hydrogen atoms of ammonia are substituted by an aliphatic hydrocarbon group. The aliphatic hydrocarbon groups which substitute the hydrogen atoms are preferably $C_1$ to $C_{30}$ groups. Specific examples of the aliphatic monovalent secondary amine compounds include dimethylamine, diethylamine, dipropylamine, diallylamine, diisopropylamine, di-n-butylamine, di-t-butylamine, di-sec-butylamine, dihexylamine, diheptylamine, dioctylamine, dinonylamine, didecylamine, diundecylamine, didodecylamine, ditridecylamine, ditetradecylamine, dipentadecylamine, dicetylamine, di-2-ethylhexylamine, dioctadecylamine, and the like.

The aliphatic monovalent tertiary amine compounds are compounds where all the three hydrogen atoms of ammonia are substituted by an aliphatic hydrocarbon group. The aliphatic hydrocarbon groups which substitute the hydrogen atoms are preferably $C_1$ to $C_{30}$ groups. Specific examples of the aliphatic monovalent tertiary amine compounds include trimethylamine, triethylamine, tripropylamine, triallylamine, triisopropylamine, tri-n-butylamine, tri-t-butylamine, tri-sec-butylamine, trihexylamine, triheptylamine, trioctylamine, trinonylamine, tridecylamine, triundecylamine, tridodecylamine, and the like.

The content of the cross-linking accelerator in the acrylic rubber composition according to the present invention is preferably 0.1 to 10 parts by weight, more preferably 0.5 to 7.5 parts by weight, particularly preferably 1 to 5 parts by weight relative to 100 parts by weight of the rubber components containing the acrylic rubber. When the content of the cross-linking accelerator falls within the ranges above, a cross-linked rubber having further improved tensile strength and compression set resistance can be obtained.

The acrylic rubber composition according to the present invention may further contain an antioxidant as needed. Examples of the antioxidant include, but should not be limited to, the above-mentioned phenolic antioxidants; phosphorous acid ester antioxidants such as tris(nonylphenyl) phosphite, diphenylisodecyl phosphite, and tetraphenyldipropylene glycol diphosphite; sulfur ester antioxidants such as dilauryl thiodipropionate; amine antioxidants such as phenyl-$\alpha$-naphthylamine, phenyl-$\beta$-naphthylamine, p-(p-toluenesulfonylamide)-diphenylamine, 4,4'-bis($\alpha$,$\alpha$-dimethylbenzyl)diphenylamine, N,N-diphenyl-p-phenylenediamine, N-isopropyl-N'-phenyl-p-phenylenediamine, and butylaldehyde-aniline condensates; imidazole antioxidants such as 2-mercaptobenzimidazole; quinoline antioxidants such as 6-ethoxy-2,2,4-trimethyl-1,2-dihydroquinoline; hydroquinone antioxidants such as 2,5-di-(t-amyl)hydroquinone; and the like.

These antioxidants can be used alone or in combination. Although the content of the antioxidant in the rubber composition according to the present invention is not particularly limited, the content is preferably 0.01 to 15 parts by weight, more preferably 0.05 to 10 parts by weight, still more preferably 0.1 to 5 parts by weight relative to 100 parts by weight of the rubber components including the copolymer rubber according to the present invention.

Besides the ingredients described above, the acrylic rubber composition according to the present invention can contain compounding agents usually used in the rubber processing field. Examples of such compounding agents include photostabilizers; scorch retardants; processing aids; tackifiers; lubricants; greases; flame retardants; antifungal agents; antistatic agents; colorants; cross-linking retarders; and the like. These compounding agents can be compounded in any amount in the range not inhibiting the object and effect of the present invention, and can be appropriately compounded in amounts according to the purpose of compounding.

The acrylic rubber composition according to the present invention is prepared by compounding the cross-linking agent and a variety of compounding agents optionally used with the rubber components containing the acrylic rubber, mixing and kneading these ingredients with an open roll mill, a Banbury mixer, or a kneader, and further kneading the ingredients with a kneading roll.

Although the ingredients can be compounded in any order, preferred order is as follows. Ingredients which barely react or decompose by heat are sufficiently mixed, and then ingredients which readily react or decompose by heat, such as the cross-linking agent, are mixed in a short time at a temperature at which the reaction and the decomposition thereof are avoided.

<Cross-linked rubber>

The cross-linked rubber according to the present invention is obtained by cross-linking the above-mentioned acrylic rubber composition according to the present invention.

The cross-linked rubber according to the present invention can be produced as follows: The acrylic rubber composition according to the present invention is formed with a forming machine which can form the acrylic rubber composition into a desired shape, such as an extruder, an injection molding machine, a press, or a roll, and the formed product is cross-linked by heating into a cross-linked rubber having a fixed shape. In this case, cross-linking may be performed after the acrylic rubber composition is preliminarily formed, or cross-linking and forming may be performed at the same time. The forming temperature is usually 10 to 200°C, preferably 25 to 120°C. The cross-linking temperature is usually 130 to 220°C, preferably 150 to 190°C, and the cross-linking time is usually 2 minutes to 10 hours, preferably 3 minutes to 5 hours. The heating method is appropriately selected from methods used in cross-linking of rubber, such as press heating, steam heating, oven heating, and hot air heating.

The cross-linked rubber according to the present invention may be further heated to undergo secondary cross-linking depending on the shape and size of the cross-linked rubber. The secondary cross-linking is performed preferably for 1 to 48 hours although the time varies depending on the heating method, the cross-linking temperature, the shape of the product, and the like. The heating method and the heating temperature may be appropriately selected.

The cross-linked rubber according to the present invention thus obtained is suitably used as sealing materials such as O-rings, packings, diaphragms, oil seals, shaft seals, bearing sheaths, mechanical seals, wellhead seals, seals for electrical and electronic devices, and seals for air compressors; a variety of gaskets such as cylinder head gaskets attached to a connection between a cylinder block and a cylinder head, rocker cover gaskets attached to a connection between a rocker cover and a cylinder head, oil pan gaskets attached to a connection between an oil pan and a cylinder head or a transmission case, gaskets for fuel cell separators attached between a pair of housings to sandwich a unit cell including a positive electrode, an electrolyte plate, and a negative electrode, and a gasket for top covers for hard disk drives; buffer materials; vibration insulators; coating materials for electric wires; industrial belts; tubes and hoses; sheets; and the like.

The cross-linked rubber according to the present invention is also suitably used as extrusion molded products and cross-linked products used in automobile applications, for example, fuel oil hoses for fuel tanks such as fuel hoses, filler neck hoses, vent hoses, vapor hoses, and oil hoses, air hoses such as turbo air hoses and transmission control hoses, and a variety of hoses such as radiator hoses, heater hoses, brake hoses, and air conditioner hoses.

<<Second embodiment>>

Next, the acrylic rubber composition according to a second embodiment of the present invention will be described.

The acrylic rubber composition according to the second embodiment comprises an acrylic rubber, a carbon black having a nitrogen adsorption specific surface area-to-iodine adsorption amount ratio of $1.00 \times 10^3$ m$^2$/g or greater and a nitrogen adsorption specific surface area of 25 m$^2$/g or greater, and a plasticizer, wherein the content of the plasticizer is 3 parts by weight or more relative to 100 parts by weight of rubber components containing the acrylic rubber.

Examples of monomer units forming the acrylic rubber used in the second embodiment include the same monomer units as those forming the acrylic rubber in the first embodiment. The acrylic rubber used in the second embodiment can be obtained by polymerizing the monomers used in the acrylic rubber according to the first embodiment by emulsion polymerization or the like.

The glass transition temperature of the acrylic rubber used in the second embodiment is not particularly limited, and is preferably -10°C to -40°C. When the glass transition temperature (Tg) falls within the ranges above, the acrylic rubber can have heat resistance and cold resistance in a better balance.

As in the first embodiment, the acrylic rubber composition according to the second embodiment comprises a carbon black having a nitrogen adsorption specific surface area-to-iodine adsorption amount ratio of $1.00 \times 10^3$ m$^2$/g or greater and a nitrogen adsorption specific surface area of 25 m$^2$/g or greater. An acrylic rubber composition comprising an acrylic rubber, a carbon black usually used in the acrylic rubber, and 3 parts by weight or more of a plasticizer relative to 100 parts by weight of the rubber components tends to have reduced roll processability. In contrast, in the present invention where the above-mentioned carbon black is used, an acrylic rubber composition containing 3 parts by weight or more of a plasticizer can have excellent roll processability, and a cross-linked rubber having excellent tensile strength can be obtained.

As in the carbon black used in the first embodiment, it is preferred that in the carbon black used in the second embodiment, the nitrogen adsorption specific surface area-to-iodine adsorption amount ratio, the nitrogen adsorption specific surface area, the iodine adsorption amount, the DBP absorption amount, the hydrogen content determined by NMR, and the full width at a half maximum ΔD of the Raman scattering peak be within predetermined ranges.

Specifically, the carbon black has a nitrogen adsorption specific surface area-to-iodine adsorption amount ratio of preferably $1.10 \times 10^3$ to $1.50 \times 10^3$ m$^2$/g, a nitrogen adsorption specific surface area of preferably 25 to 60 m$^2$/g, and an iodine adsorption amount of preferably 17 to 60 mg/g. The carbon black preferably has a DBP absorption amount of 90 to 180 cm$^3$/100 g. The hydrogen content determined by NMR is preferably 150 to 250/g. In the Raman spectrum obtained in measurement at an excitation wavelength of 532 nm using a laser Raman spectroscope, the full width at a half maximum ΔD of the Raman scattering peak appearing in the range of 1340 to 1360 cm$^{-1}$ is preferably 260 to 290 cm$^{-1}$.

The content of the carbon black in the acrylic rubber composition is preferably 5 to 100 parts by weight, more preferably 10 to 70 parts by weight, still more preferably 50 to 70 parts by weight.

The content of the plasticizer in the acrylic rubber composition according to the second embodiment is 3 parts by weight or more, preferably 5 parts by weight or more, more preferably 7 parts by weight or more relative to 100 parts by weight of the rubber components containing the acrylic rubber. The upper limit of the content of the plasticizer in the acrylic rubber composition is preferably 30 parts by weight or less, more preferably 20 parts by weight or less, although not particularly limited. Wehn the content of the plasticizer in the acrylic rubber composition falls within the ranges above, a cross-linked rubber having excellent cold resistance can be obtained.

Examples of the plasticizer used in the second embodiment include the same plasticizers as those used in the first embodiment.

In addition to the above-mentioned ingredients, the acrylic rubber composition according to the second embodiment may contain the cross-linking agent, the cross-linking accelerator, and the antioxidant according to the first embodiment as well as other compounding agents usually used. The acrylic rubber composition according to the second embodiment is prepared by compounding the cross-linking agent and a variety of compounding agents optionally used with the rubber components containing the acrylic rubber, mixing and kneading these ingredients with an open roll mill, a Banbury mixer, or a kneader, and further kneading the ingredients with a kneading roll.

The cross-linked rubber according to second embodiment can be obtained by the same method as that in the first embodiment using the above-mentioned acrylic rubber composition.

EXAMPLES

Hereinafter, the present invention will be more specifically described by way of Examples, but the present invention will not be limited to these Examples. Note that the term "part(s)" is weight-based unless otherwise specified. A variety of physical properties were measured as follows.

<Glass transition temperature>

Using a differential scanning calorimetry (DSC), an acrylic rubber was measured for glass transition temperature.

<Roll processability>

Roll processability was determined from work efficiency when an acrylic rubber composition was wound around a roll at a temperature of 50°C using a kneader (8-inch roll).

○: Rolling can be performed without a problem.
△: Rolling can be performed in spite of strong tackiness to the roll.
×: Rolling is difficult due to very strong tackiness to the roll.

<Normal physical properties (tensile strength)>

A rubber composition was placed into a mold having a length of 15 cm, a width of 15 cm, and a depth of 0.2 cm, and was press molded at 170°C for 20 minutes under a press pressure of 10 MPa, thereby obtaining a sheet-shaped cross-linked rubber. Next, the obtained cross-linked rubber was transferred into a geer oven, and subjected to secondary cross-linking at 170°C for 4 hours. The resulting sheet-shaped cross-linked rubber was punched out with JIS #3 dumbbell to prepare a test piece. The obtained test piece was measured for tensile strength of the cross-linked rubber in accordance with JIS K6251:2017.

<Cold resistance test>

An acrylic rubber composition was placed into a mold having a length of 15 cm, a width of 15 cm, and a depth of 0.2 cm, and was press molded at 170°C for 20 minutes while pressure was being applied, thereby obtaining a sheet-shaped cross-linked product. Thereafter, the cross-linked product was subjected to a secondary cross-linking at 170°C for 4 hours, giving a sheet-shaped cross-linked rubber. The obtained sheet-shaped cross-linked product was measured for cold resistance of the cross-linked rubber by a low-temperature retraction test (TR test) in accordance with JIS K6261-4:2017. Specifically, the retraction of a stretched test piece was measured by freezing the stretched test piece and then continuously increasing the temperature, and a temperature TR10 when the length of the test piece shrunk (returned) 10% was measured. It can be determined that a lower temperature TR10 indicates more excellent cold resistance.

<Example 1>

(Preparation of acrylic rubber composition)

Using a kneader, 100 parts of a carboxylic acid-based acrylic rubber (trade name "Nipol AR14", available from ZEON Corporation) was compounded with 60 parts of medium abrasion furance (MAF) carbon (carbon black), 5 parts of a polyether ester plasticizer (trade name "ADEKA CIZER RS-735", available from ADEKA Corporation), 2 parts of stearic acid, 0.5 parts of a cross-linking agent (trade name "VC-1", available from Chemours Company), and 2 parts of a cross-linking aid (trade name "RHENOGRAN XLA-60 (GE2014)", available from Rhein Chemie Corporation, DBU: 60% (including a portion which is a zinc dialkyldiphosphate salt), and these were kneaded with a roll. Thus, an acrylic rubber composition was obtained. The obtained acrylic rubber composition was measured for roll processability, and the cross-linked rubber was measured for tensile strength and cold resistance. The results are shown in Table 1. In the carbon black used, the nitrogen adsorption specific surface area-to-iodine adsorption amount ratio was $1.33 \times 10^3$ m$^2$/g, the nitrogen adsorption specific surface area was 53 m$^2$/g, the iodine adsorption amount was 40 mg/g, the DBP absorption amount was 120 cm$^3$/100 g, and the hydrogen content measured by the above-mentioned method was 150 to 250/g, and the full width at a half maximum $\Delta D$ of the Raman scattering peak measured by the above-mentioned method was 260 to 290 cm$^{-1}$.

<Example 2>

An acrylic rubber composition was obtained as in Example 1 except that 100 parts of the carboxylic acid-based acrylic rubber was replaced by 100 parts of a chlorine-based acrylic rubber (trade name "Nipol AR74X", available from ZEON Corporation), 0.5 parts of the cross-linking agent (VC-1) and 2 parts of the cross-linking aid (XLA-60) were replaced by 0.3 parts of sulfur, 3 parts of a cross-linking aid (trade name "NONSOUL SN-1", available from NOF CORPORATION), and 0.5 parts of a cross-linking aid (trade name "NONSOUL SK-1", available from NOF CORPORATION), and evaluations were performed likewise. The results are shown in Table 1.

<Example 3>

An acrylic rubber composition was obtained as in Example 1 except that 100 parts of the carboxylic acid-based acrylic rubber (Nipol AR14) was replaced by 100 parts of a carboxylic acid-based acrylic rubber (trade name "Nipol AR12", available from ZEON Corporation), and the amount of the carbon black was changed to 65 parts, and evaluations were performed likewise. The results are shown in Table 1.

<Example 4>

An acrylic rubber composition was obtained as in Example 2 except that 100 parts of the chlorine-based acrylic rubber (Nipol AR12) was replaced by 100 parts of a chlorine-based acrylic rubber (trade name "Nipol AR71", available from ZEON Corporation), and the amount of the plasticizer was changed to 15 parts, and evaluations were performed likewise. The results are shown in Table 1.

<Example 5>

An acrylic rubber composition was obtained as in Example 2 except that 100 parts of the chlorine-based acrylic rubber was replaced by 100 of an epoxy-based acrylic rubber (trade name "Nipol AR42W", available from ZEON Corporation), the amount of the carbon black was changed to 65 parts, and the amount of the plasticizer was changed to 10 parts, and evaluations were performed likewise. The results are shown in Table 1.

<Example 6>

An acrylic rubber composition was obtained as in Example 1 except that the plasticizer was not used, and evaluations were performed likewise. The results are shown in Table 1.

<Comparative Examples 1-2, and 5>

Acrylic rubber compositions were obtained as in Example 1 except that the types and amounts of the acrylic rubber and the compounding agents were varied as shown in Table 1, and evaluations were performed likewise.

<Comparative Example 3>

An acrylic rubber composition was obtained as in Example 1 except that 60 parts of the carbon black used in Example 1 was replaced by 60 parts of a carbon black (trade name "N330", available from Cabot Japan K.K.), and evaluations were performed likewise. The results are shown in Table 1.

<Comparative Example 4>

An acrylic rubber composition was obtained as in Example 1 except that 60 parts of the carbon black used in Example 1 was replaced by 60 parts of a carbon black (trade name "N550", available from Cabot Japan K.K.), and evaluations were performed likewise. The results are shown in Table 1.

[Table 1]

Table 1

| | | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|
| **Acrylic rubber** | | | | | | | | | | | | |
| Nipol AR14 | (parts) | 100 | - | - | - | - | 100 | - | - | 100 | 100 | - |
| Nipol AR74X | (parts) | - | 100 | - | - | - | - | - | - | - | - | - |
| Nipol AR12 | (parts) | - | - | 100 | - | - | - | - | - | - | - | 100 |
| Nipol AR71 | (parts) | - | - | - | 100 | - | - | 100 | - | - | - | - |
| Nipol AR42W | (parts) | - | - | - | - | 100 | - | - | 100 | - | - | - |
| **Composition of acrylic rubber composition** | | | | | | | | | | | | |
| Carbon black | | | | | | | | | | | | |
| MAF | (parts) | 60 | 60 | 65 | 60 | 65 | 60 | 60 | 60 | - | - | 60 |
| N330 | (parts) | - | - | - | - | - | - | - | - | 60 | - | - |
| N550(FEF) | (parts) | - | - | - | - | - | - | - | - | - | 60 | - |
| Iodine adsorption amount | (mg/g) | 40 | 40 | 40 | 40 | 40 | 40 | 40 | 40 | 80 | 43 | 40 |
| Nitrogen adsorption specific surface area | ($m^2$/g) | 53 | 53 | 53 | 53 | 53 | 53 | 53 | 53 | 75 | 40 | 53 |
| Nitrogen adsorption specific surface area/-iodine adsorption amount | ($\times 10^3$ $m^2$/g) | 1.33 | 1.33 | 1.33 | 1.33 | 1.33 | 1.33 | 1.33 | 1.33 | 0.94 | 0.93 | 1.33 |

EP 4 563 649 A1

(continued)

| | | | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|
| | DBP adsorption amount | $(cm^3/100g)$ | 120 | 120 | 120 | 120 | 120 | 120 | 120 | 120 | 101 | 115 | 120 |
| | Hydrogen content | (/g) | 150~250 | 150~250 | 150~250 | 150~250 | 150~250 | 150~250 | 150~250 | 150~250 | - | - | 150~250 |
| | Full width at half maximum $\Delta D$ | $(cm^{-1})$ | 260~290 | 260~290 | 260~290 | 260~290 | 260~290 | 260~290 | 260~290 | 260~290 | - | - | 260~290 |
| Plasticizer | | (parts) | 5 | 5 | 5 | 15 | 10 | 0 | 2 | 0 | 5 | 5 | 0 |
| Cross-linking agent | | | | | | | | | | | | | |
| | VC-1 | (parts) | 0.5 | - | 0.5 | - | - | 0.5 | - | - | 0.5 | 0.5 | 0.5 |
| | Sulfur | (parts) | - | 0.3 | - | 0.3 | 0.3 | - | 0.3 | 0.3 | - | - | - |
| Cross-linking aid | | | | | | | | | | | | | |
| | XLA-60 | (parts) | 2 | - | 2 | - | - | 2 | - | - | 2 | 2 | 2 |
| | NONSOUL SN-1 | (parts) | - | 3 | - | 3 | 3 | - | 3 | 3 | - | - | - |
| | NONSOUL SK-1 | (parts) | - | 0.5 | - | 0.5 | 0.5 | - | 0.5 | 0.5 | - | - | - |
| Stearic acid | | (parts) | 2 | 2 | 2 | 2 | 2 | 2 | 2 | 2 | 2 | 2 | 2 |
| **Properties of acrylic rubber** | | | | | | | | | | | | | |
| Glass transition temperature | | | -29°C or less | -29°C or less | More than -29°C | More than -29°C | More than -29°C | -29°C or less | More than -29°C | More than -29°C | -29°C or less | -29°C or less | More than -29°C |
| | | (°C) | -39 | -37 | -28 | -15 | -26 | -39 | -15 | -26 | -39 | -39 | -28 |
| **Evaluations** | | | | | | | | | | | | | |
| | Roll processability of acrylic rubber com position | | ○ | ○ | ○ | ○ | ○ | ○ | ○ | ○ | × | △ | ○ |

(continued)

| | | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|
| Tensile strength of cross-linked rubber | (Mpa) | 10.6 | 11.2 | 11.9 | 12.9 | 11.5 | 11.5 | 14.9 | 13 | 10 | 8.5 | 12.5 |
| Cold resistance of cross-linked rubber | (°C) | -37 | -39 | -25 | -24 | -26 | -34 | -12 | -20 | -37 | -37 | -20 |

Table 1 shows that the acrylic rubber compositions each comprising an acrylic rubber having a glass transition temperature of - 29°C or lower and a carbon black having a nitrogen adsorption specific surface area-to-iodine adsorption amount ratio of $1.00 \times 10^3$ m$^2$/g or greater and a nitrogen adsorption specific surface area of 25 m$^2$/g or greater had excellent roll processability, and provided cross-linked rubbers having excellent cold resistance and tensile strength (Examples 1, 2, and 6). Moreover, the acrylic rubber compositions each comprising an acrylic rubber, a carbon black having a nitrogen adsorption specific surface area-to-iodine adsorption amount ratio of $1.00 \times 10^3$ m$^2$/g or greater and a nitrogen adsorption specific surface area of 25 m$^2$/g or greater, and 3 parts by weight or more of a plasticizer relative to 100 parts by weight of rubber components had excellent roll processability, and provided cross-linked rubbers having excellent cold resistance and tensile strength (Examples 3 to 5).

In contrast, even in the acrylic rubber compositions each comprising an acrylic rubber and a carbon black having a nitrogen adsorption specific surface area-to-iodine adsorption amount ratio of $1.00 \times 10^3$ m$^2$/g or greater and a nitrogen adsorption specific surface area of 25 m$^2$/g or greater, less than 3 parts by weight of a plasticizer resulted in cross-linked rubbers having inferior cold resistance (Comparative Examples 1, 2, and 5).

Moreover, the acrylic rubber composition comprising a carbon black having a nitrogen adsorption specific surface area-to-iodine adsorption amount ratio of less than $1.00 \times 10^3$ m$^2$/g had inferior roll processability (Comparative Examples 3 and 4), and provided a cross-linked rubber having inferior tensile strength (Comparative Example 4).

**Claims**

1. An acrylic rubber composition comprising:

   an acrylic rubber having a glass transition temperature of -29°C or lower; and
   a carbon black having a nitrogen adsorption specific surface area-to-iodine adsorption amount ratio of $1.00 \times 10^3$ m$^2$/g or greater and a nitrogen adsorption specific surface area of 25 m$^2$/g or greater.

2. An acrylic rubber composition comprising:

   an acrylic rubber;
   a carbon black having a nitrogen adsorption specific surface area-to-iodine adsorption amount ratio of $1.00 \times 10^3$ m$^2$/g or greater and a nitrogen adsorption specific surface area of 25 m$^2$/g or greater; and
   a plasticizer,
   wherein the content of the plasticizer is 3 parts by weight or more relative to 100 parts by weight of rubber components containing the acrylic rubber.

3. The acrylic rubber composition according to claim 1, further comprising a plasticizer.

4. The acrylic rubber composition according to any one of claims 1 to 3, wherein the carbon black has a nitrogen adsorption specific surface area of 25 to 60 m$^2$/g, and
   the carbon black has a nitrogen adsorption specific surface area-to-iodine adsorption amount ratio of $1.10 \times 10^3$ to $1.50 \times 10^3$ m$^2$/g.

5. The acrylic rubber composition according to any one of claims 1 to 4, wherein the carbon black has a DBP absorption amount of 90 to 180 cm$^3$/100 g.

6. The acrylic rubber composition according to any one of claims 1 to 5, wherein when the carbon black gives a nuclear magnetic resonance signal in a spin-spin relaxation process observed by a solid echo method, the nuclear magnetic resonance signal being represented by a sum of a first signal and a second signal having a time constant greater than that of the first signal, the hydrogen content in the carbon black represented by a signal intensity per unit mass at Time 0 of the first signal is 150 to 250/g.

7. The acrylic rubber composition according to any one of claims 1 to 6, wherein the carbon black gives a Raman scattering peak appearing in the range of 1340 to 1360 cm$^{-1}$ having a full width at a half maximum $\Delta$D of 260 to 290 cm$^{-1}$ where the excitation wavelength is 532 nm.

8. The acrylic rubber composition according to claim 1 or 2, wherein the carbon black has a nitrogen adsorption specific surface area of 25 to 60 m$^2$/g,

the carbon black has a nitrogen adsorption specific surface area-to-iodine adsorption amount ratio of $1.10 \times 10^3$ to $1.50 \times 10^3$ m$^2$/g,

the carbon black has a DBP absorption amount of 90 to 180 cm$^3$/100 g,

when the carbon black gives a nuclear magnetic resonance signal in a spin-spin relaxation process observed by a solid echo method, the nuclear magnetic resonance signal being represented by a sum of a first signal and a second signal having a time constant greater than that of the first signal, the hydrogen content in the carbon black represented by a signal intensity per unit mass at Time 0 of the first signal is 150 to 250/g, and

the carbon black gives a Raman scattering peak appearing in the range of 1340 to 1360 cm$^{-1}$ having a full width at a half maximum $\Delta$D of 260 to 290 cm$^{-1}$ where the excitation wavelength is 532 nm.

9. A cross-linked rubber obtained by cross-linking the acrylic rubber composition according to any one of claims 1 to 8 with an amine compound.

## INTERNATIONAL SEARCH REPORT

| International application No. |
|---|
| **PCT/JP2023/027442** |

| A. | CLASSIFICATION OF SUBJECT MATTER |
|---|---|

*C08L 33/08*(2006.01)i; *C08C 19/00*(2006.01)i; *C08K 3/04*(2006.01)i
FI:    C08L33/08; C08C19/00; C08K3/04

According to International Patent Classification (IPC) or to both national classification and IPC

| B. | FIELDS SEARCHED |
|---|---|

Minimum documentation searched (classification system followed by classification symbols)

C08L33/08; C08C19/00; C08K3/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2019-214674 A (NOK CORP) 19 December 2019 (2019-12-19) | 1-5, 9 |
|   | claims, example 2 | |
| Y | | 6-8 |
| X | JP 2016-150525 A (SUMITOMO RIKO CO LTD) 22 August 2016 (2016-08-22) | 1-5, 9 |
|   | claims, example 4 | |
| Y | | 6-8 |
| X | JP 2018-203917 A (NOK CORP) 27 December 2018 (2018-12-27) | 1-5, 9 |
|   | claims, example 5 | |
| Y | | 6-8 |
| Y | WO 2020/209082 A1 (TOKAI CARBON CO., LTD.) 15 October 2020 (2020-10-15) | 6-8 |
|   | claims, paragraphs [0015], [0027] | |
| A | "製品案内 ｜ アクリルゴム", ［オンライン］, [retrieval date 03 October 2023], Internet <URL:https://www.unimatec.co.jp/products/noxtite/> entire text, non-official translation (Product Information ｜ Acrylic Rubber. [online].) | 1-9 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 October 2023** | **17 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/027442**

| C. | DOCUMENTS CONSIDERED TO BE RELEVANT | |
|---|---|---|
| Category* | Citation of document, with indication, where appropriate, of the relevant passages | Relevant to claim No. |
| A | "シースト物理化学特性", ［オンライン］, [retrieval date 03 October 2023], Internet <URL:https://www.tokaicarbon.co.jp/products/carbon_b/pdf/SEAST.pdf> entire text, non-official translation (Sheet physicochemical properties. [online].) | 1-9 |

Form PCT/ISA/210 (second sheet) (January 2015)

## INTERNATIONAL SEARCH REPORT
### Information on patent family members

International application No.

**PCT/JP2023/027442**

| Patent document cited in search report | | | Publication date (day/month/year) | Patent family member(s) | | | Publication date (day/month/year) |
|---|---|---|---|---|---|---|---|
| JP | 2019-214674 | A | 19 December 2019 | (Family: none) | | | |
| JP | 2016-150525 | A | 22 August 2016 | US claims, example 4 | 2016/0238164 | A1 | |
| | | | | CN | 105885317 | A | |
| JP | 2018-203917 | A | 27 December 2018 | (Family: none) | | | |
| WO | 2020/209082 | A1 | 15 October 2020 | US paragraphs [0036], [0065] | 2022/0195200 | A1 | |
| | | | | EP | 3954548 | A1 | |
| | | | | CN | 113677542 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016150525 A